(19) **Europäisches Patentamt / European Patent Office / Office européen des brevets**

(11) **EP 3 027 964 B1**

(12) **FASCICULE DE BREVET EUROPEEN**

(45) Date de publication et mention
de la délivrance du brevet:
**20.09.2017 Bulletin 2017/38**

(21) Numéro de dépôt: **14748252.5**

(22) Date de dépôt: **21.07.2014**

(51) Int Cl.:
**F21V 8/00** *(2006.01)*       **G02B 6/00** *(2006.01)*
**F21S 8/10** *(2006.01)*

(86) Numéro de dépôt international:
**PCT/FR2014/051865**

(87) Numéro de publication internationale:
**WO 2015/015088 (05.02.2015 Gazette 2015/05)**

(54) **DISPOSITIF D'ECLAIRAGE ET/OU DE SIGNALISATION DE VEHICULE NOTAMMENT AUTOMOBILE**

BELEUCHTUNGS- UND/ODER SIGNALISIERUNGSVORRICHTUNG FÜR EIN FAHRZEUG, INSBESONDERE EIN KRAFTFAHRZEUG

LIGHTING AND/OR SIGNALLING DEVICE FOR A VEHICLE, IN PARTICULAR A MOTOR VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.08.2013 FR 1357706**

(43) Date de publication de la demande:
**08.06.2016 Bulletin 2016/23**

(73) Titulaire: **PSA Automobiles SA
78300 Poissy (FR)**

(72) Inventeurs:
• **GONCALVES, Whilk Marcelino
75013 Paris (FR)**
• **BLANCHET, Florian
91440 Bures Sur Yvette (FR)**
• **SURUGUE, Michel
91190 Gif Sur Yvette (FR)**

(56) Documents cités:
**WO-A2-2007/002476     FR-A1- 2 985 300
GB-A- 2 443 215**

**Description**

L'invention concerne un dispositif d'éclairage et/ou de signalisation de véhicule et notamment de véhicule automobile, et se rapporte plus précisément à un dispositif qui assure une fonction de signalisation, par exemple de type feu central de stop (ou troisième feu de stop - en anglais CHMSL (pour « Center High Mounted Stop Light »)).

Dans ce dernier cas, le dispositif est généralement placé dans la partie centrale supérieure de la lunette arrière du véhicule qui sert de support audit dispositif, et comprend, d'une part, une source de lumière (lampe(s) halogène(s) ou diodes électroluminescentes (ou LEDs)), et, d'autre part, au moins un réflecteur ou un guide de lumière.

En raison de son lieu d'implantation, le dispositif obstrue une partie de la lunette arrière, ce qui réduit le champ d'observation du conducteur. On comprendra que plus le dispositif est encombrant, par exemple du fait d'un effet de style recherché, plus il réduit le champ d'observation.

Afin de remédier à cet inconvénient, il a été proposé notamment par le document FR2985300, et tel qu'illustré aux figures 1 et 2, d'utiliser un guide de lumière planaire, rapporté contre la lunette arrière PT, à l'intérieur du véhicule, ou réalisé dans la matière même de la lunette arrière PT, et de définir, dans une partie choisie du guide, une zone ZT destinée à transférer la lumière vers l'extérieur, à l'arrière du véhicule. Plus précisément, une source de lumière SL est chargée de délivrer de la lumière au niveau d'un bord (par exemple supérieur BS ou inférieur BI) du guide, et cette lumière se propage à l'intérieur de ce dernier entre ses faces intérieure FI et extérieure FE du fait de réflexions totales, jusqu'à ce qu'elle parvienne au niveau de la zone de transfert ZT qui est agencée de manière à la transférer vers l'extérieur, via la face extérieure.

La zone de transfert ZT de lumière est constituée par une succession de renfoncements internes RI définissant des stries dont l'inclinaison de leurs faces principales est choisie de manière à réfléchir la lumière incidente vers l'extérieur suivant une direction générale choisie (éventuellement sensiblement perpendiculaire à la face extérieure du guide, lorsque cette dernière est sensiblement verticale).

Afin d'étaler verticalement et/ou horizontalement la distribution lumineuse, pour répondre aux spécifications réglementaires, les stries nécessitent d'avoir un pas fin, ce qui rend un aspect réticulaire indésirable lorsque le dispositif, éteint ou allumé, est observé de l'extérieur, et impacte l'invisibilité du dispositif et donc l'esthétique de la lunette arrière pour un observateur situé derrière le véhicule.

L'invention a donc pour but de proposer un dispositif simple et dépourvu de strie, qui ne présente donc pas les inconvénients précités en garantissant une discrétion du dispositif éteint et des propriétés photométriques de qualité similaire voire améliorées ainsi qu'une grande diversité dans la forme du faisceau de lumière et pouvant éventuellement permettre des effets de style lumineux variés.

Elle propose plus précisément, à cet effet, un dispositif d'éclairage et/ou de signalisation comprenant un guide de lumière muni d'une face intérieure et d'une face extérieure, et une source de lumière propre à délivrer de la lumière au niveau d'un bord du guide de lumière afin qu'elle se propage intérieurement entre les faces intérieures et extérieures, ledit guide comportant un prisme de sortie apte à dévier la lumière vers la face extérieure du guide de lumière.

Ledit dispositif est caractérisé en ce que la surface du prisme est obtenue par convolution des profils vertical et horizontal du prisme ; chaque profil étant défini par une courbe de type spline.

Selon une caractéristique, l'un des profils est défini par une courbe de type sinusoïdale par approximation.

Selon une autre caractéristique, les deux courbes sont des courbes de type sinusoïdales par approximation.

Selon une autre caractéristique, le profil de la surface du prisme est convexe.

Selon une autre caractéristique, le guide de lumière est réalisé soit en verre, soit en matériau synthétique.

Selon une caractéristique, le guide de lumière est disposé contre, ou vient de matière avec, une partie vitrée transparente à la lumière de manière à ce que la lumière sortant du guide de lumière par le prisme de sortie, traverse la partie vitrée.

La présente invention a pour autre objet une lunette arrière de véhicule automobile équipée d'un dispositif tel que décrit précédemment pour réaliser une fonction de signalisation de type feu central de stop.

La présente invention a pour dernier objet un véhicule automobile, comprenant une lunette telle décrite ci-dessus.

D'autres caractéristiques et avantages de l'invention apparaîtront à l'examen de la description détaillée ci-après, et des dessins annexés, sur lesquels :

- la figure 1, déjà décrite, illustre schématiquement, dans une vue en perspective (du côté de la face intérieure), un exemple de réalisation d'un dispositif selon l'état de la technique ;
- la figure 2, déjà décrite, illustre schématiquement, dans une vue en coupe suivant l'axe II-II de la figure 1, la zone de transfert du dispositif de la figure 1 ;
- la figure 3 illustre schématiquement une section verticale du guide lumière d'un dispositif selon l'invention ;
- la figure 4 illustre un premier mode de réalisation d'une surface complexe de déviation en sortie du guide de lumière du dispositif selon l'invention ; et
- la figure 5 illustre un deuxième mode de réalisation d'une surface complexe de déviation en sortie du guide de lumière du dispositif selon l'invention.

Dans ce qui suit, on considère, à titre d'exemple non limitatif, que le dispositif est destiné à équiper un véhicule, éventuellement de type automobile. Mais l'invention n'est pas limitée à cette application. Un dispositif, selon l'invention, peut en effet équiper tout type de système, équipement, appareil ou dispositif, y compris des murs, vitrines ou cloisons de bâtiment.

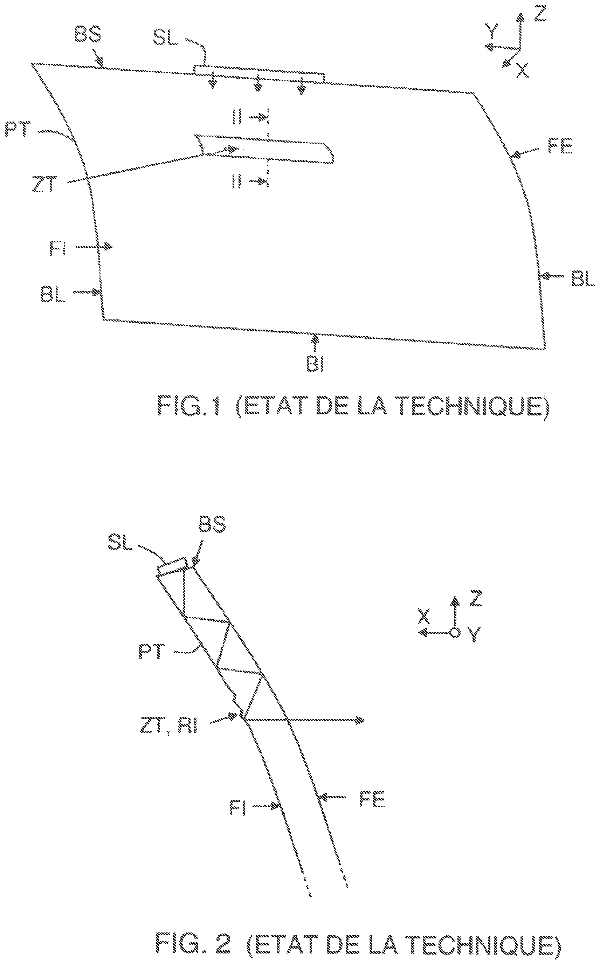

Sur les différentes figures 1 à 5, la direction X est la direction longitudinale du véhicule : laquelle est sensiblement parallèle aux côtés latéraux, la direction Y est la direction transversale du véhicule : laquelle est sensiblement perpendiculaire aux côtés latéraux, et la direction Z est la direction verticale du véhicule : laquelle est sensiblement perpendiculaire aux directions longitudinale X et transversale Y.

On considère dans ce qui suit, à titre d'exemple non limitatif, que le guide de lumière PT est sur ou dans une lunette arrière de véhicule automobile. Mais l'invention n'est pas limitée à ce type de paroi transparente. Il pourrait en effet s'agir d'une vitre de fenêtre ou de baie vitrée ou d'une vitrine ou encore d'une partie d'un meuble.

La présente invention propose une solution technique pour éliminer les stries de l'état de l'art, basée sur une utilisation des courbes du type « spline » (appelées également courbes de Bézier) appliquées à la construction d'un prisme utilisé pour une fonction d'éclairage et/ou de signalisation.

Pour rappel, on donne ci-après la définition mathématique des courbes spline (définition extraite de Wikipédia) :

Une courbe spline est une fonction polynomiale par morceaux définie sur un intervalle [a,b] divisé en sous intervalles $[t_{i-1}, t_i$ tels que :

$$a = t_0 < t_1 < \cdots < t_{k-1} < t_k = b$$

on la note donc $S : [a, b] \rightarrow \mathbb{R}$.

Sur chaque intervalle $[t_{i-1}, t_i]$ on définit un polynôme

$$P_i : [t_{i-1}, t_i] \rightarrow \mathbb{R},$$

Cela nous donne, pour une spline à k intervalles :

$$S(t) = P_1(t) , \ t_0 \leq t < t_1,$$

$$S(t) = P_2(t) , \ t_1 \leq t < t_2,$$

Le cas le plus courant des splines est la spline cubique. Elle est uniforme et définie par des polynômes de degré 3.

Un polynôme de degré 3 s'écrivant il nécessite quatre contraintes (a, b, c, d) pour être défini.

Ces quatre contraintes par intervalle vont nous permettre d'interpoler des courbes splines passant par un ensemble de points donnés, dans différents cas :

Soit un ensemble de points $Q_i$ que nous souhaitons interpoler par une spline cubique. Nous définissons un paramètre $t_i$ associé à chaque point $Q_i$, qui seront les valeurs pour lesquelles $S(t_i) = Q_i$. De là, nous avons de multiples manières d'interpoler notamment en utilisant une interpolation avec les tangentes.

Nous connaissons les tangentes $T_i$ associées à chaque point $Q_i$.

Nous pouvons donc écrire que, pour chaque polynôme $P_i(t)$, nous avons :

$$\begin{cases} P_i(t_{i-1}) = Q_{i-1} \\ P'_i(t_{i-1}) = T_{i-1} \\ P_i(t_i) = Q_i \\ P'_i(t_i) = T_i \end{cases}$$

Ces quatre contraintes par intervalle permettent de calculer chaque polynôme et donc de définir complètement la spline.

L'utilisation des courbes spline pour la construction d'un prisme déviateur de lumière selon l'invention amène à une simplification de l'organe de déviation de la lumière et l'assurance que l'aspect allumé et éteint du feu sera transparent et discret.

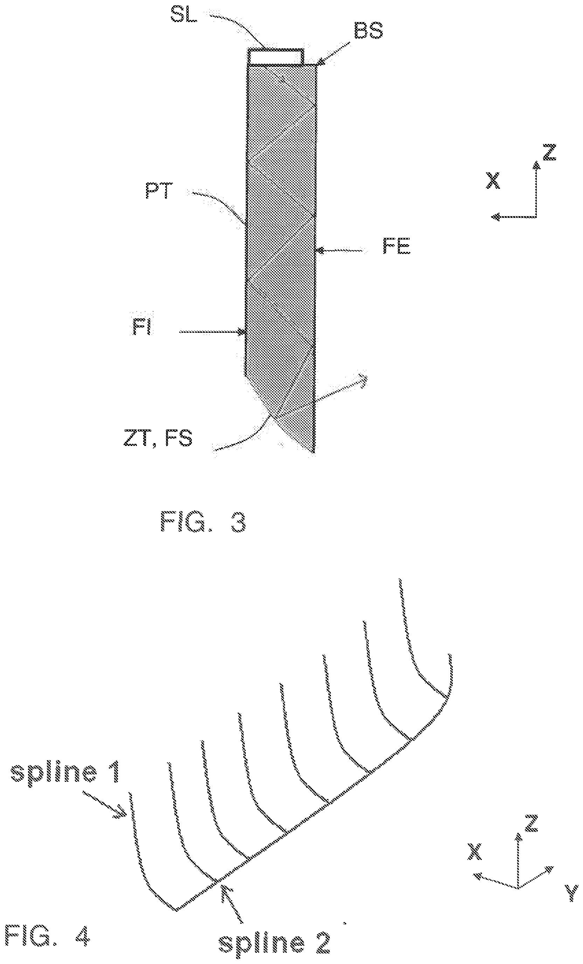

La figure 3 représente un guide de lumière PT d'un dispositif selon l'invention dont la face de sortie FS est conformée pour présenter un prisme dont les profils horizontal et vertical suivent chacun une courbe du type « spline ».

La déviation du faisceau lumineux généré par la source de lumière SL ne se fait plus suivant une direction unique perpendiculaire à la face extérieure FE du guide, comme c'est le cas avec le guide de lumière de l'état de la technique, mais suivant des directions comprises entre une direction perpendiculaire à la face extérieure FE du guide et une direction correspondant à celle de la face extérieure FE du guide soit une direction verticale (suivant Z).

Selon l'invention, et en référence à la figure 4, il est donc possible de calculer un profil vertical du prisme de sortie (déviation horizontale du faisceau dans le plan XY), suivant une courbe du type Spline 2, permettant de contrôler d'une façon fine et continue, la variation du vecteur normal à la surface du prisme, et donc l'angle de sortie des rayons lumineux, sans avoir besoin de stries et autres éléments optiques supplémentaires en sortie du guide de lumière PT.

Le profil horizontal du prisme (déviation verticale du faisceau dans le plan XZ) est calculé suivant une courbe du type Spline 1

La forme finale du prisme FS ou surface complexe de déviation en sortie du guide de lumière PT est obtenue par la convolution des profils vertical (courbe Spline 2) et horizontal (courbe Spline 1) ou réciproquement.

La courbe de type Spline 2 est également désignée par « courbe guide ». On utilise également les termes suivants pour désigner le calcul de ce prisme : « convolution ou « sweep » de la Spline 1 guidée par la Spline 2 ».

La surface complexe de déviation FS présente une forme convexe à la sortie du guide de lumière.

A l'aide de cette surface complexe FS, la distribution lumineuse en sortie du guide de lumière PT peut être ajustée afin d'accomplir les exigences réglementaires de la fonction « feu stop surélevé » et pour que son aspect à l'état « éteint » reste transparent.

Si l'homogénéité du faisceau dans son état « allumé » est recherchée, il suffit d'ajuster les formes des familles de courbes de type Spline 1 avec la courbe de type Spline 2 pour obtenir le rendu lumineux souhaité, du type sans tache de lumière.

A l'inverse, il est possible d'obtenir d'autres aspects ou rendus lumineux comme par exemple, des bandes verticales et/ou horizontales, tout en gardant la transparence de la fonction « feu stop surélevé » en mode éteint.

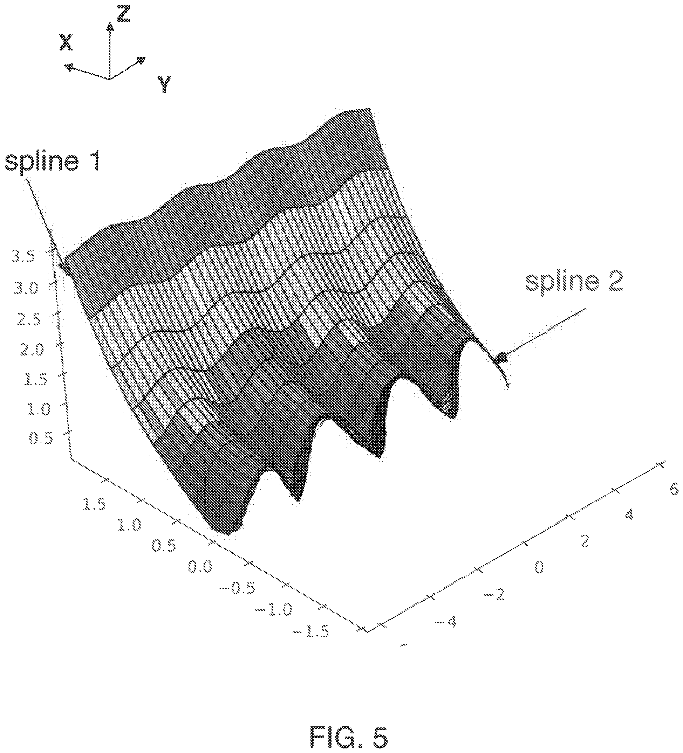

Pour cela, une courbe de forme sinusoïdale par approximation est avantageusement utilisée comme Spline 2, comme illustrée à la figure 5.

Un rendu « matriciel » sera obtenu en choisissant avantageusement des fonctions sinusoïdales par approximation pour chacune des courbes de type Spline 1 et Spline 2.

Le guide de lumière PT est par exemple réalisé en verre ou en matériau synthétique, par exemple par moulage ou par gravité.

Il est de préférence de type guide de lumière planaire, à section droite rectangulaire, définissant un barreau et il disposé à l'intérieur de l'habitacle contre la lunette arrière et localisé sensiblement au même endroit sur la lunette que le dispositif de l'état de la technique illustré à la figure 1.

La grande dimension du barreau s'étendant selon la direction Y.

La source de lumière SL peut, par exemple, comprendre au moins une diode électroluminescente (ou LED), et de préférence plusieurs, faisant partie d'un circuit électronique. Mais dans une variante de réalisation, la source de lumière SL pourrait comprendre au moins une lampe (ou ampoule) ou un guide de lumière.

Chaque diode électroluminescente SL peut être agencée de manière à émettre une lumière blanche ou bien une lumière colorée, par exemple rouge dans le cas d'une fonction de signalisation de type feu de stop. On notera que dans certaines applications on peut utiliser des diodes électroluminescentes agencées de manière à émettre des lumières de couleurs différentes.

On notera que dans le cas d'une lunette arrière, la fonction d'éclairage (ou optique) choisie est une fonction de signalisation de type feu central de stop (ou CHMSL). Mais d'autres fonctions d'éclairage plus ou moins complexes peuvent être envisagées selon les applications pour lesquelles le dispositif est employé.

On notera également qu'en choisissant judicieusement la forme des courbes génératrices (ou courbes de contrôle) du prisme déviateur de guide de lumière, on peut créer soit une tâche lumineuse plus ou moins homogène et/ou offrir différents aspects lumineux pour la fonction d'éclairage (éventuellement de signalisation) et par exemple un rendu « pixélisé » de type matriciel.

## Revendications

1. Dispositif d'éclairage et/ou de signalisation comprenant un guide de lumière (PT) muni d'une face intérieure (FI) et d'une face extérieure (FE), et une source de lumière (SL) propre à délivrer de la lumière au niveau d'un bord (BS) du guide de lumière (PT) afin qu'elle se propage intérieurement entre les faces intérieures (FI) et extérieures (FE), ledit guide (PT) comportant un prisme de sortie (FS) apte à dévier la lumière vers la face extérieure (FE) du guide de lumière (PT), **caractérisé en ce que** la surface du prisme (FS) est obtenue par convolution des profils vertical et horizontal du prisme (FS) ; chaque profil étant défini par une courbe de type spline (spline 1, spline 2).

2. Dispositif selon la revendication 1, **caractérisé en ce que** l'un des profils est défini par une courbe de type sinusoïdale par approximation.

3. Dispositif selon la revendication 1, **caractérisé en ce que** les deux courbes sont des courbes de type sinusoïdales par approximation.

4. Dispositif selon l'une des revendications précédentes, **caractérisé en ce que** le profil de la surface du prisme (FS) est convexe.

5. Dispositif selon l'une des revendications 1 à 4, **caractérisé en ce que** le guide de lumière (PT) est réalisé soit en verre, soit en matériau synthétique.

6. Dispositif selon l'une des revendications 1 à 5, **ca-**

**ractérisé en ce que** le guide de lumière (PT) est disposé contre, ou vient de matière avec, une partie vitrée transparente à la lumière de manière à ce que la lumière sortant du guide de lumière par le prisme de sortie (FS), traverse la partie vitrée.

7. Lunette arrière de véhicule automobile équipée d'un dispositif selon l'une quelconque des revendications précédentes pour réaliser une fonction de signalisation de type feu central de stop.

8. Véhicule automobile, **caractérisé en ce qu'**il comprend une lunette arrière selon la revendication précédente.

## Patentansprüche

1. Beleuchtungs- und/oder Signalisierungsvorrichtung, die einen Lichtleiter (PT) umfasst, der mit einer Innenseite (FI) und eine Außenseite (FE) versehen ist, und eine Lichtquelle (SL), die geeignet ist, um Licht im Bereich eines Rands (BS) des Lichtleiters (PT) zu liefern, damit es sich im Inneren zwischen der Innenseite (FI) und der Außenseite (FE) ausbreitet, wobei der Lichtleiter (PT) ein Ausgangsprisma (FS) umfasst, das geeignet ist, das Licht zu der Außenseite (FE) des Lichtleiters (PT) abzulenken, **dadurch gekennzeichnet, dass** die Fläche des Prismas (FS) durch Faltung des vertikalen und horizontalen Profils des Prismas (FS) erhalten wird; wobei jedes Profil durch eine Kurve des Typs Spline (spline 1, spline 2) definiert ist.

2. Vorrichtung nach Anspruch 1, **dadurch gekennzeichnet, dass** eines der Profile durch eine Kurve des sinusförmigen Typs durch Annäherung definiert ist.

3. Vorrichtung nach Anspruch 1, **dadurch gekennzeichnet, dass** die zwei Kurven Kurven des sinusförmigen Typs durch Annäherung sind.

4. Vorrichtung nach einem der vorhergehenden Ansprüche, **dadurch gekennzeichnet, dass** das Profil der Fläche des Prismas (FS) konvex ist.

5. Vorrichtung nach einem der Ansprüche 1 bis 4, **dadurch gekennzeichnet, dass** der Lichtleiter (PT) entweder aus Glas oder aus einem synthetischen Werkstoff hergestellt ist.

6. Vorrichtung nach einem der Ansprüche 1 bis 5, **dadurch gekennzeichnet, dass** der Lichtleiter (PT) gegen einen verglasten Teil, der für das Licht durchlässig ist, derart angeordnet oder mit ihm aus einem Stück hergestellt ist, dass das aus dem Lichtleiter durch das Ausgangsprisma (FS) austretende Licht den verglasten Teil durchquert.

7. Heckfensterscheibe eines Kraftfahrzeugs, die mit einer Vorrichtung nach einem der vorhergehenden Ansprüche ausgestattet ist, um eine Signalgebungsfunktion des Typs zentrale Bremsleuchte herzustellen.

8. Kraftfahrzeug, **dadurch gekennzeichnet, dass** es eine Heckfensterscheibe nach dem vorhergehenden Anspruch umfasst.

## Claims

1. A lighting and/or signalling device including a light guide (PT) provided with an interior face (FI) and an exterior face (FE), and a light source (SL) able to deliver light at the level of an edge (BS) of the light guide (PT) so that it propagates internally between interior (FI) and exterior (FE) faces, said guide (PT) comprising an output prism (FS) able to deflect the light towards the exterior face (FE) of the light guide (PT), **characterized in that** the surface of the prism (FS) is obtained by convolution of the vertical and horizontal profiles of the prism (FS); each profile being defined by a spline-type curve (spline 1, spline 2).

2. The device according to Claim 1, **characterized in that** one of the profiles is defined by a curve of sinusoidal type by approximation.

3. The device according to Claim 1, **characterized in that** the two curves are curves of sinusoidal type by approximation.

4. The device according to one of the preceding claims, **characterized in that** the profile of the surface of the prism (FS) is convex.

5. The device according to one of Claims 1 to 4, **characterized in that** the light guide (PT) is made either from glass or from synthetic material.

6. The device according to one of Claims 1 to 5, **characterized in that** the light guide (PT) is disposed against, or is integral with, a glazed part transparent to light such that the light exiting the light guide via the output prism (FS) passes through the glazed part.

7. A rear window of a motor vehicle equipped with a device according to any one of the preceding claims for carrying out a signalling function of the central brake light type.

8. A motor vehicle, **characterized in that** it includes a rear window according to the preceding claim.

EP 3 027 964 B1

FIG.1 (ETAT DE LA TECHNIQUE)

FIG. 2 (ETAT DE LA TECHNIQUE)

FIG. 3

FIG. 4

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2985300